# EUROPEAN PATENT APPLICATION

(11) **EP 0 888 718 A1**
(43) Date of publication of application: **07.01.1999**
(21) Application number: 97111371.7
(22) Date of filing: 05.07.1997
(51) Int. Cl.: A23L 1/212

(54) **Tomato product and method of making same**

(71) Applicant: SOCIETE DES PRODUITS NESTLE S.A., 1800 Vevey (CH)
(72) Inventor: Bueno Raya, José Carlos, 06004 Badajoz (ES); Latorre Arteche, Antonio Claudio, 06005 Badajoz (ES)

(57) **Abstract**

The invention relates to a process for preparing tomato-based products comprising one of the following steps 1) heating raw tomatoes for a sufficient time to inactivate the enzymes; 2) separating from the heated tomatoes a juice and a slurry containing seeds and peels; 3) separating the seeds and peels from the slurry; 4) dividing finely the separated slurry; and 5) reincorporating the divided slurry into the juice. The invention also relates to a tomato-based product obtainable from steps 1 to 4 of the process.

## Description

The present invention generally relates to tomato based products and processes, and more particularly to a new high-consistency tomato product and a method of making the same.

### State of the art

It is recognized in the industry that consistency is an important attribute of tomato juice. In particular, higher consistency represents better quality. It is to be especially noted that consistency has no fixed relationship with solids contents so that, whereas two lots of tomato juice prepared by different procedures and/or different raw materials may have identical solids contents, their consistencies may be radically different. The matter of consistency is not only important with regard to tomato juice per se but also with regard to products prepared therefrom such as concentrated juice, pastes, sauces, ketchups, etc. In all these products a higher consistency signifies better quality and, to attain such quality, it is necessary that the juice employed as the starting material be of high consistency.

In the patents U.S.3366488, US3366489 and US3366490 there are disclosed procedures for preparing high-consistency tomato juices. These procedures have the common denominator of applying an acid to a tomato macerate, that is, the pulpy mass of juice, skins, seeds, etc. formed when tomatoes are subjected to maceration. For instance, as described in U.S.3366488, raw tomatoes are subjected to maceration and heating. Hydrochloric acid is added to the hot macerate to reduce the pH to less than 3.5. The acidified macerate is then treated to separate the juice from the skins and seeds, and the juice is cooled and restored to its original pH by addition of sodium hydroxide, yielding a product of higher consistency than would not be attained in the absence of the acid treatment. In the processes of US3366489 and US3366490 the acid treatment is applied as the raw tomatoes are being macerated and heated.

In the patent US3976805, production of juice of increased consistency is achieved by a procedure wherein (1) the acid is applied not to the tomato macerate nor to the raw tomatoes, but to the juice extracted therefrom, and (2) the treated juice is homogenized. The juice may be restored to its natural pH before or after homogenation, the former being generally preferred.

In addition, WO 94/12055 (Unilever) discloses the use of pectinesterase in the preparation of food containing fruit or vegetables to demethoxylate the pectin, and the addition of calcium chloride allowing the mixture to form a gel. Viscosity increases due to pectinesterase and calcium chloride treatment under processing conditions, allowing the preparation of a high-consistency food product, such as a tomato product.

Likewise, EP 736262 (Kraft) teaches that homogenization of a tomato slurry releases additional pectin from the tomato pulp viscosity of the product and the amount of serum retained by the product. Thus, it was recognized that when homogenized under the proper conditions, tomato sauces could attain viscosities equal to those of unhomogenized products containing 10-15 % more net total tomato solids.

Finally, tomatoes usually contain from 7 % to 8.5 % total solids, of which about 1 % is skins and seeds. The tomato skin consists of four or five layers of cells under a thin cuticle. Usually, the epidermal layer has a heavily cutinized outer surface. In all the vegetal cell walls, polysaccharides are the predominant constituents. The general composition is considered to be approximately 30 % cellulose, 30 % hemicellulose, 35 % pectin and 5 % proteins ; in the later ripening stages, lignine can also be found in great quantities. In the cell walls of the aerial organs of the plant, covers of waxes, coutine and suberine can also be found (Goult, Tomato Production Processing & Technology, CTI Publications Inc, Baltimore, 1992).

During processing of raw tomatoes into tomato juice paste coarse particles (skin, seeds and vegetable fibers), containing tissues which are quite useful in nutritional terms, are freed from the valuable food tissues and form residues (see SU 1762881 for instance). The present invention provides a method for recuperating tomato residues during processing to get less damaged product by using a lower temperature to get a higher consistency if required and/or a higher yield of tomato paste or juice.

### Summary of the invention

The present invention concerns a process for preparing tomato-based products comprising one of the following steps:
1) heating raw tomatoes for a sufficient time to inactivate the enzymes;
2) separating from the heated tomatoes a juice and a slurry containing seeds and peels;
3) separating the seeds and peels from the slurry;
4) dividing finely the separated slurry; and
5) reincorporating the divided slurry into the juice.

The present invention has also for object a tomato-based product obtainable from steps 1 to 4 of the process according to the invention, and its use in the preparation of food products.

The consequences of the addition of the divided slurry into the tomato juice, to produce tomato juice and/or paste, are of big interest for tomato production and important from a technological and economical point of view. These reasons are summarised as follows:
- It would be possible to reach in a 28/30 Hot-Break paste or in a Hot-Break paste at higher temperatures (Super Hot-Break) the standard specifications regarding consistency and water binding capacity with lower temperatures in the Hot-Break. This reduction would damage the product less, obtaining one with a better colour, flavour and nutritional value.
- It would be possible to reach a high consistency tomato paste if required by the purchasers' specifications, with no need to change other processing parameters, i.e. finisher screen size, Hot-Break holding time and temperatures. It would only be required for the final quality of tomato paste (pulpiness, etc...).
- The temperature reduction in the Hot-Break will lead to energy savings, with repercussions in the global steam and fuel consumption.
- It would be possible to increase the production flow-rate of specific products, i.e. reducing the holding time in high consistency products (Super Hot-Break paste), keeping the same production flow-rate as normal consistency products (Hot-Break paste).
- It would be possible to increase the tomato paste production yield by recovering tomato residues that can be size reduced and added into tomato juice. This addition will have a limitation, depending on the final quality of the paste.
- Tomato paste with higher consistency and water binding capacity can lead to a significant cost saving in the production of tomato-based finished products, both by reducing the quantity of thickeners to be used in the recipe, and tomato solids, or other ingredients that have an influence on the final consistency of the product.

### Detailed description of the invention

In the context of the present invention, "tomato slurry" designates a mixture of tomato pulp, skin, seeds and fibers originating from tomato cell walls and which are of a sufficiently big size to be rejected from standart tomato juice extractors. Moreover, "tomato peels" should be understood as the coarse particles of tomato skins and fibers contained in the above-defined tomato slurry.

To implement the present process for preparing tomato-based products, raw tomatoes are first chopped and then heated for a sufficient time to inactivate the enzymes. Indeed, when processing tomatoes, it is most important that the chopped tomato be heated in excess of 90°C so as to reduce enzyme activity to a minimum, since, once a tomato is broken up, this tends to destroy pectins contained in the pulp, leading in consequence to a lack of density in the final product. In systems currently employed, this is done either by heating the chopped tomato by means of a rotating coil in open-tank conditions; or mingling freshly-chopped tomato with ready-heated mince at normal atmospheric pressure.

In the "Hot Break" method the tomatoes are rapidly heated immediately following chopping (see US517598, for instance). The advantage of the Hot Break is that a greater yield is obtained and a more viscous product that does not separate when left standing. Suitably, temperatures applied in the Hot Break method may be 90°C-140°C, but the highest temperatures affect the natural tomato's vitamins, colour and flavour. The Cold Break process may also be applied to chopped tomatoes, by use of mild heating, that is to say from 65°C to 90°C, allowing the retention of most of the tomato's natural vitamins, colour and flavour, but detrimental to the density of the final product if the lower temperatures are applied.

Surprisingly, depending on the desired consistency of the tomato-juice, the present invention allows the use of temperature conditions milder than those required in the past. If very high-consistency is desired, the highest temperatures may be used, suitably 110-140°C, but these are detrimental to the tomato's vitamins, colour and flavour. If high-consistency is desired, temperatures from 90°C-110°C may be used, whereas in the past higher temperatures were needed to achieve this. Finally, if the lower acceptable tomato consistency is desired, temperatures from 65-90°C may be used, whereasin the past higher temperatures were needed to obtain a comparable consistency. Consequently, when implementing the present process, the temperature and the time applied to inactivate the enzymes may be sufficient to substantially inactivate all pectin degrading enzymes, but insufficient to damage the natural tomato's colour and flavour. To do so, suitable temperatures may be 65-95°C.

In the second step of the present process, extraction of tomato juice may be accomplished by two main types of commercially available extractors: the screw type and the paddle type. The purpose of this step is to separate a slurry containing peels and seeds which are already detached from the pulp during chopping by the action of pectolitic enzymes.

A paddle extractor beats the chopped tomato against a screen, whereas screw-type extractors press the tomatoes between a screw and a screen. For screw-type extractors, the pressing action of the juice extractor consists of an expanding helix inside a tomato juice screen, in which chopped tomato is forced against the screen at continuing and increasing pressures; this processing does not chum the product, therefore very little air is incorporated into the juice. With the paddle extactor, the beaters are mounted so as to impart a screw-type advance to the chopped mass and to keep the surface of the sieve constantly clean. (Fruit and Vegetables Juice Processing Technology, AVI Pulblishing, Westport, 1971).

Preferably, a pulping part of the extractor first separate a slurry containing peels and seeds, and at the same time, a refining part of the extractor eliminates from the extracted juice extraneous material or fragments of spoiled parts which are further mixed into the separated slurry.

Suitably, successive separation may also be effected on the juice at least once, with progressively smaller holes through which the juice is forced, to further eliminate from the juice other extraneous material. In the context of the present invention, these extraneous materials and fragments of spoiled parts which are successively separated from the juice, also designate the slurry separated from chopped tomatoes.

The first sieve, normally called the sieving machine, has holes of the order of about 2-3 mm of diameter and allows the removal of pips, stalks, green parts and particularly spoiled scarred parts and of a large part of the skins. The chopped mass enters into the first sieve and is squeezed against the surface, which, in the case of the paddle-type extactor, may be of cylindrical or frustonical shape so as to allow easy modification of the space between the filtering surface and the beater unit. The rotation speed of the paddles also may be chosen to allow maximal extraction of juice, suitably at 1500-2500 rotations per min (rpm), for instance.

The second unit, normally called the pulping machine, is very similar to the sieving machine, and sometimes is moved by the same motor. This second unit has a passage opening of 0.6-2.2 mm of diameter which allows the removal of fragments of pips and skins and other particles which have passed through the sieving machine. In the case of the paddle-type extactor, the rotation speed of the paddles also may be chosen to allow maximal extraction of a juice from the slurry, suitably at 1500-2500 rotations per min (rpm), for instance.

In case more than one separation is effected on the juice, as described above with the pulping machine, another unit(s) called super-refining machine(s), similar to the other, may also be used to remove remaining impurities in the juice. This super-refining machine is provided with a sieve with holes measuring about 0.6-2 mm of diameter, and is generally driven by a separate motor working at 1500-2500 rpm, for instance.

The following extractors are of particular interest for the purpose of the present invention, but not limited to this extent.

In the Butterfly model made by Rossi & Catelli (Italy), the fixed longitudinal beaters are replaced by trapezoidal blades which are free to position themselves. Rotation of the shaft causes the blades to come out and they squeeze the chopped mass onto the cylindrical sieve. The combination of the centrifugal force and the resistance of the product automatically sets the optimum distance between sieve and blade; moreover, the intensity of the centrifugal force, which is related directly to the speed of the shaft, can be regulated very easily by DC motors. The machine is therefore very flexible and does not have to be stopped for adjustment.

The D-Turbo extractor made by Fenco (Italy) is of a quite different design, being built like the helical extractors described for the extraction of juice for drinking. The rotor is an element made in one casting, in which the special profile of the fins causes a "niche"-type centrifugal rotary movement of the chopped mass to be established, with resulting separation of the juice by difference in mass in relation to the coarser suspended material and draining through a first sieve with very small holes (the sequence of sieves is in fact opposite to that in the units already described: first the finest sieve and then the sieve with larger holes). The partially drained chopped mass then passes, pushed by the incoming product, into the second section where it undergoes squeezing proper. From the first stage, a very refined juice emerges (holes of 0.5 mm); from the second, a puree with a lot of material in suspension, of greater consistency and of lower quality. The fact that the passage of the juice takes place simply by centrifugal force and not by squeezing against the filtering wall reduces the possibility of wear of the sieve and the power required.

The efficiency of sieving machines is proportional to the maintenance of the actual passage openings and that is to say the cleanness of the sieves themselves; this is of particular importance today with very fibrous tomatoes and the presence of extraneous vegetable material, and the FBR-Altech (Italy) solution appears interesting : this provides the possibility of washing the sieves, carried out directly with the juice as well as by steam or water, without having to shut down the line for admission of water.

Interestingly, extraction of chopped tomatoes eliminates as residues (slurry) 2-5% of the original tomato solids. Since it would be detrimental for the taste and the colour of the juice to re-introduce the slurry into the juice, these residues are usually partially re-incorporated into the chopped tomatoes, to further extract them. The present invention intends however to reincorporate this slurry into the final juice, by processing the slurry as follows.

Indeed, seeds and peels are first separated from the slurry, by any means appropriate for the skilled worker, but preferably by means which allow substantial elimination of all dry coarse particles of the slurry. To do so, paddle and screw type extractors may be used for passing the slurry in a sieve under low pressure (rotation speed of about 500-100 rpm in case of a paddle-type extractor) through holes having diameters sufficient to retain substantially all seeds and peels, suitably 0.6-2 mm of diameter, for instance.

Secondly, the separated slurry is finely divided so as to reduce down particles that would normally give a woody taste and coarse texture to the juice, if re-introduced as such in the juice. To do so, any method appropriate to cut tomato particles into smaller pieces may be used, such as an homogeniser (APV Manton-Gaulin, DK), a colloid mill (Fryma-Mashinen AG, DE) and/or a rotative cutter (Comitrol, Urshel, US), for instance. Preferably, reduction of the tomato particles down is effected so as to obtain at least 90% of particles having a diameter lower than 0.8 mm, 70% of the particles having a diameter lower than 0.5 mm, 50% of the particles having a diameter lower than 0.3 mm, and optionally 20% of the particles having a diameter lower than 0.15 mm.

In a particular embodiment of the present invention, the peels and the seeds separated from the slurry are further separated so as to eliminate the seeds and recuperate the peels. To do so, the flotation property of these tomato constituents may be taken into account, in view of the fact that peels float on the water while seeds do not. For this purpose, a tank provided with a continuous water supply and recirculation system may be used. The tomato peels and empty seeds remain on the water surface and are transported by water stream, while seeds sink very quickly to the bottom of the tank and can be further collected.

Interestingly, re-incorporation of the peels (and empty seeds) in the separated slurry, before the step of division, allows introduction of high amounts of lycopens, pectins and tomato flavours, which would otherwise be lost. Re-incorporation of the peels in the slurry (not divided) thus may be carried out at a ratio of 10-50%, preferably at 15-25% by weight.

Finally the divided slurry, which optionally contains peel residues, is re-incorporated into the tomato juice, for instance at a ratio of 0.5-7% by weight, allowing the obtaining of high-consistency tomato juice without detrimental effect on colour and taste. This juice may be further acidified, salted and/or concentrated to a puree, for example.

This divided slurry is new in terms of fibers composition, flavour and capacity to thicken a liquid food composition. It thus may be used as a tomato-based thickener in the preparation of a food product, especially under dried form for the thickening of liquid food products, for instance.

The present invention is not to be limited in scope by the specific embodiments described herein. Indeed, various modifications of the invention, in addition to those described herein, will become apparent to those skilled in the art from the foregoing description and accompanying figures. Such modifications are intended to fall within the scope of the claims. Various publications are cited herein, the disclosures of which are incorporated by reference in their entireties to the extent necessary for understanding the present invention. In the following description, the percentages are given by weight except where otherwise stated.

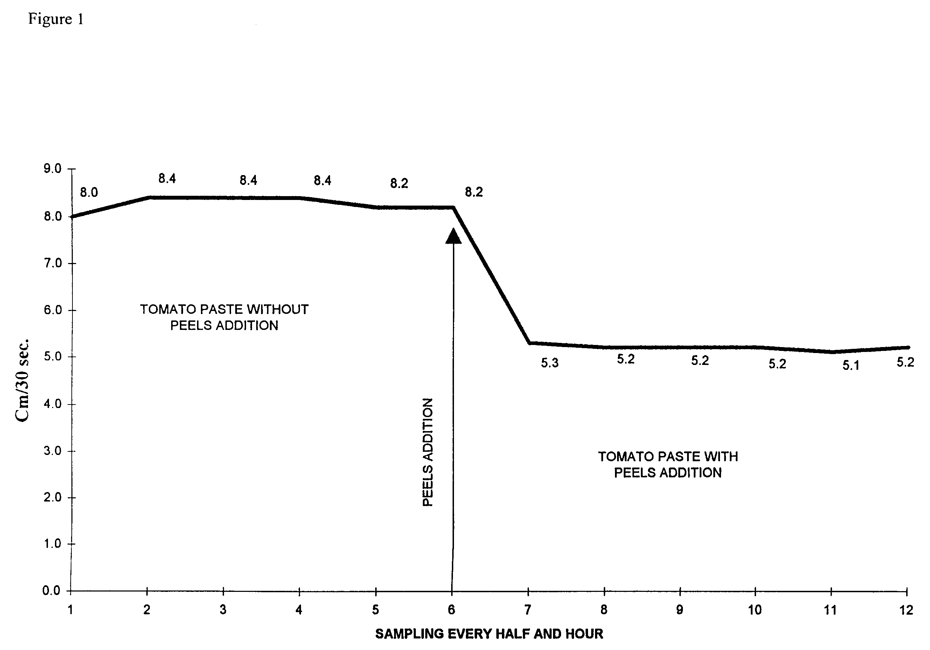

Example 1 is to be read in connection with figure 1 which shows, in an industrial line, the effect of the addition of a size reduced slurry to tomato juice on the Bostwich flow-rate value.

### Example 1

The tomato slurry rejected by an industrial pulper and finisher (Butterfly P30, Rossi&Catelli) under standard conditions (pulper: holes of 3mm ⌀; finisher: holes of 1.2 mm ⌀; speed of 2500 rpm) is passed into another turbofinisher (Butterfly P15, Rossi&Catelli; holes of 0.8 mm ⌀, and speed of 800 rpm) to extract the maximum of fibres and pulp from the slurry, obtaining a rough slurry, and discarding almost dry peels and seeds.

The rough slurry obtained from the turbofinisher is then passed firstly through a colloid mill (Fryma-Maschinen AG), and after through a homogeniser (APV Manton-Gaulin) at 175 Kg/cm2, to reduce the particle size down to a suitable one, and eliminate, as much as possible, the woody taste of the slurry. Table 1 presents the composition of the treated slurry.

**Table 1**

| | | |
|---|---|---|
| DRY MATTER (%) | | 7.4 |
| ALCOHOL INSOLUBLE SOLIDS (% in DM) | | 45.0 |
| PULP (% in DM) | | 45.0 |
| TOTAL CALCIUM (mg / 100 g in DM) | | 188.5 |
| SOLUBLE CALCIUM (mg/100 g in DM) | | 37.4 |
| ACID-DETERGENT FIBRE (% in DM) | | 23.6 |
| LYCOPENE (mg / 100 g in DM) | | 1110 |
| PECTINS (mg A.G. / 100 mg) | Water soluble | 71.7 |
| | Oxalate soluble | 382.9 |
| | NaOH soluble | 72.4 |

Finally 2 % of the treated slurry is incorporated into the tomato juice tank before evaporation of the juice to get a paste. On the industrial line, the Bostwich flow-rate value is periodically measured, every 30 min, for the juice containing the treated slurry and compared to standard juice without the treated slurry. Results are presented in figure 1 and show a drastic change of the Bostwich value after addition of the treated slurry. In addition, tables 2-3 present the analysis of tomato paste samples containing, or not, 2 % of the treated slurry.

The results show in particular a significant increase in Pulp, Alcohol Insoluble Solids and Acid-Detergent Fibre contents, this increase being higher than that which could be obtained by modifying the standard processing conditions, such as screen size, finishers speed or holding time in the industrial line, if the treated slurry was not added.

The Precipitate Weight Ratio, a new method for consistency evaluation, highly correlated with Bostwick consistency (Takada and Nelson, Journal of Food Science, 48, 1983), is also improved with the addition of the treated slurry, as well as the Libby's viscosity of the serum from the 12° Brix dilution.

In addition, the incorporation of the treated slurry bring about an increase of the Lycopene content of tomato paste, with the corresponding improvement of colour as well as the potential antioxidant properties and nutritional aspects. To measure the colour of the samples, each sample of paste is heated to room temperature, a portion is removed and placed in small plastic Petri dishes intended for colorimetreic analysis with a Color-Eye-7000° spectrophotometer (Macbeth, Division of Kollmorgen Instruments Corporation, New Windsor, NY, USA). This apparatus makes it possible to measure the parameters L*, a* and b*, according to the CIELAB notation (see also F.J. Francis et al., Food colorimetry : theory and applications, AVI Publishing Company, Inc., Westport, Virginia, USA), which characterize the shades and the brightness. The red, yellow, green and blue shades form a colour wheel placed in a plane a* and b*. The parameter L* defines the brightness of the colours which varies vertically in the plane a* and b*. Each value L*, a* and b* obtained for each paste sample results from the mean of 3 separate measurements.

**Table 2**

| | Sampling | °BRIX | BOSTWICK | L* | a* | b* | a*/b* |
|---|---|---|---|---|---|---|---|
| Paste without the treated slurry | 1 | 29.5 | 8.O | 24.9 | 28.4 | 14.3 | 2.0 |
| | 2 | 29.0 | 8.4 | 24.8 | 28.3 | 14.3 | 2.0 |
| | 3 | 29.0 | 8.4 | 24.8 | 28.3 | 14.3 | 2.0 |
| | 4 | 29.0 | 8.4 | 24.9 | 28.3 | 14.3 | 2.0 |
| | 5 | 28.6 | 8.2 | 24.8 | 28.3 | 14.3 | 2.0 |
| | 6 | 28.3 | 8.2 | 24.9 | 28.3 | 14.3 | 2.0 |
| Average | | 28.9 | 8.3 | 24.8 | 28.3 | 14.3 | 2.0 |
| Paste with the treated slurry | 7 | 28.9 | 5.3 | 25.3 | 28.1 | 14.5 | 1.9 |
| | 8 | 28.8 | 5.2 | 25.3 | 28.2 | 14.6 | 1.9 |
| | 9 | 29.3 | 5.2 | 25.3 | 28.1 | 14.6 | 1.9 |
| | 10 | 29.2 | 5.2 | 25.3 | 28.1 | 14.6 | 1.9 |
| | 11 | 29.3 | 5.1 | 25.3 | 28.1 | 14.6 | 1.9 |
| | 12 | 28.9 | 5.2 | 25.3 | 28.1 | 14.6 | 1.9 |
| Average | | 29.1 | 5.2 | 25.3 | 28.1 | 14.6 | 1.9 |

**Table 3**

| Analytical parameters | | Paste without the treated slurry | Paste with the treated slurry |
|---|---|---|---|
| Dry matter (% DM) | | 29.34 | 28.98 |
| °Brix | | 28.27 | 28.0 |
| Factor °Brix/ % DM | | 0.96 | 0.97 |
| Water soluble Matter (%, calcination) | | 94.9 | 90.1 |
| pH | | 4.5 | 4.4 |
| Pulp content (% in DM) | | 14.13 | 16.86 |
| Alcohol insoluble solids (AIS; % DM) | | 4.92 | 4.97 |
| Sum of AIS and pulp (% DM) | | 19.05 | 21.83 |
| Total calcium (mg / 100g DM) | | 129.5 | 133.0 |
| Soluble calcium (mg / 100g DM) | | 33.7 | 28.9 |
| Acid-detergent fibre (% DM) | | 6.4 | 9.5 |
| Pectins (mg A.G. / 100 mg) | Water soluble | 226.0 | 289.3 |
| | Oxalate soluble | 476.7 | 529.1 |
| | NaOH soluble | 43.1 | 45.0 |
| Aw | | 0.963 | 0.970 |
| Blotter (mm/30min) | | 12 | 10 |
| Precipitate Weight Ratio (%) | | 62.5 | 66.8 |
| Lycopene (mg / 100g DM) | | 852.0 | 909.2 |

### Example 2

The mix of peels and seeds discarded from the slurry of example 1 is further separated by taken the flotation properties of the peels which are able to float whereas seeds do not. For this purpose, a tank with a continuous water supply and recirculation system is used with an initial disintegration system (supplyer ??), in order to separate the sticky lumps of peels and seeds. The tomato peels and empty seeds remain on the water surface, and are transported by water stream. The seed sink very quickly to the bottom of the tank, and can be thus discarded. At the end of the washing step, the peels are collected (about 2 % of which contains empty seeds).

Under industrial conditions, about 42% peels recovery is thus obtained, the remaining rest being peels and other materials like stems, leaves and little stones, for example. It is thus possible to eliminate 98% of the seeds from the original peels and seeds mixture.

The extra-humidity obtained in the collected peels (from about 68% to 82%) may be removed by centrifugation, althought this operation would not be necessary as the water incorporation on the juice production is not significant (an incidence of less than 0.02 losses of °Brix). Results are presented in table 4 below.

**Table 4**

| | Humidity | Dry Matter | Peels and/or seeds |
|---|---|---|---|
| Peels and seeds separated from the slurry of example 1 | 68% | 32% | 5.76% of the original slurry Contains 75% peels and 25% seeds |
| Peels after drying by centrifugation | 64% | 36% | Contains 1.8% seeds |

The peels obtained in such a way are then added at 25% to the rough slurry separated from the turbofinisher of example 1. The slurry is then processed as described in example 1.

### Example 3

The process described in example 1 is carried out in a similar way with the only difference that the slurry is divided with the cutter Comitrol® from Urshel (US). The results are similar to those presented in example 1.

## Claims

**1.** A process for preparing tomato-based products comprising one of the following steps:
1) heating raw tomatoes for a sufficient time to inactivate the enzymes;
2) separating from the heated tomatoes a juice and a slurry containing seeds and peels;
3) separating the seeds and peels from the slurry;
4) dividing finely the separated slurry; and
5) reincorporating the divided slurry into the juice.

**2.** A process as claimed in claim 1, wherein in step 1) the temperature and the time are sufficient to substantially inactivate all pectin degrading enzymes, but insufficient to damage the tomato's natural colour and flavour.

**3.** A process as claimed in claim 1, wherein in step 2) a successive separation is effected on the juice at least once.

**4.** A process as claimed in claim 3, wherein successive separations are effected under pressure by means of holes having diameters smaller at each separation step.

**5.** A process as claimed in claim 1, wherein the slurry is separated by passing it under pressure through holes having diameters sufficient to retain substantially all seeds and peels.

**6.** A process as claimed in claim 1, wherein the separated slurry is finely divided by homogenisation.

**7.** A process as claimed in claim 1, wherein in step 3) the peels are further separated from the seeds and reintroduced in the separated slurry of step 4).

**8.** A tomato-based product obtainable from steps 1 to 4 of the process claimed in claim 1.

**9.** A tomato-based product according to claim 8, said product being obtainable from the process claimed in claim 7.

**11.** Use of the tomato-based product according to claims 8 or 9 in the preparation of food products.
